# EUROPEAN PATENT SPECIFICATION

(11) **EP 3 023 329 B1**
(45) Date of publication and mention of the grant of the patent: **20.12.2017**
(21) Application number: 14425147.7
(22) Date of filing: 20.11.2014
(51) Int. Cl.: B64D 11/06

(54) **Displacement system of a seat, in particular an airplane seat**
Verstellsystem eines Sitzes, insbesondere eines Flugzeugsitzes
Système de déplacement d'un siège, notamment un siège d'avion

(43) Date of publication of application: 25.05.2016
(73) Proprietor: Optimares S.p.A., 04018 Sezze Scalo (LT) (IT)
(72) Inventor: Morsicani, Alessio, 04018 Sezze Scalo LT (IT); Giordano, Andrea, 04018 Sezze Scalo LT (IT); Braca, Alessandro, 04018 Sezze Scalo LT (IT)
(74) Representative: Santi, Filippo

(56) References cited:
- EP-A2- 1 234 763
- WO-A1-00/36952
- US-A1- 2014 300 161
- US-B1- 6 305 644

## Description

The present invention concerns a displacement system for a seat, in particular an airplane seat (see, for example, WO 00/36952 A1, corresponding to the preamble of claim 1).

More precisely, the present invention concerns a system which is capable to displace a seat between a sitting configuration, a cradle configuration and a bed or extended configuration, and vice versa.

In the state of the art, the airplane seats for the business class are developed in such a way as to respond to the needs of a better comfort of the passengers during long journeys. Such seats can generally assume both a raised or sitting position, wherein the sitting portion (seat) is substantially parallel to the support plane of the seat and the backrest is substantially perpendicular to the sitting portion, and a bed or extended configuration, wherein the backrest is rotated in such a way as to be positioned substantially on the same plane of the sitting portion so as to form a bed.

Moreover, some of such seats of the prior art are able to assume also an intermediate configuration, between the sitting configuration and bed configuration, wherein the sitting portion is inclined in such a way as to present the front portion of the sitting portion raised with respect to the back portion of the sitting portion and the backrest reclined with respect to the seat. Such a configuration is generally termed "cradle" and allows the passenger to assume a position that is more relaxed, having the back laid down and the legs slightly raised.

However, from an ergonomic point of view, in the cradle configuration the weight of the passenger tends to rest on the pelvis and this entails, in the long run, postural pains.

Therefore, it is object of the present invention to solve the postural problems during the cradle configuration of the prior art seats in such a way as to allow a better sitting ergonomics of the passenger.

The invention is defined by the technical features set forth in the independent claim; optional features of the invention are disclosed in the dependent claims. It is subject matter of the present invention a displacement system for a seat, in particular an airplane seat, said seat comprising a sitting portion, a backrest and a legrest, said displacement system comprising a support structure for the support of said seat, a sitting portion structure for the support of said sitting portion, said sitting portion structure being connected to said support structure and comprising a sitting portion surface lying at least on a first plane, and displacement means acting at least on said sitting portion structure in such a way that said displacement system passes between a first configuration or sitting configuration and at least a second configuration or cradle configuration and vice versa, said displacement system providing for said sitting portion surface being subdivided into at least two sitting portions, a first portion or back portion, lying on said first plane, and a second portion or front portion, lying on a second plane, said portions being constrained in rotation with each other in the passage from said first configuration to said at least second configuration, and vice versa, said displacement means being configured in such a way as to act on said second portion so that in said first configuration said second plane is inclined with respect to said first plane by a first angle substantially of 180°, and in said at least second configuration it is inclined by a second angle positive and smaller than 180°, characterised in that said support structure comprises a fixed part and a movable part that is movable with respect to said fixed part, said movable part being integrally connected to said first portion of said sitting portion surface, and in that said displacement means are configured in such a way as to act on said movable part so that it moves in a front/back direction in the passage between said first configuration and said at least second configuration and vice versa.

Moreover, according to the invention said displacement means can be configured in such a way to act on said second portion so that in said at least a second configuration said second plane is inclined with respect to said first plane by said second angle comprised between around +175° and +120°.

Always according to the invention, said first portion can have a depth that is substantially the half of said second portion, in such a way to ergonomically support, during the use, the pelvis of a passenger.

Still according to the invention said displacement means can be configured in such a way to act on said second portion so that said displacement system is able to pass between said first configuration, said at least a second configuration and a third configuration or bed configuration, and in that said displacement means are configured in such a way that in said third configuration said second plane is inclined with respect to said first plane by a third angle substantially equivalent to 180°.

Further according to the invention, said displacement means may comprise at least a lever hinged in a first end in said support structure and in the second end in said second portion of said sitting portion surface.

In particular, according to the invention, said first plane whereon said first portion lies, in the passage between said first configuration and said at least a second configuration, and vice versa, may be constrained in a linear trajectory.

Moreover, according to the invention, said fixed part may comprise at least a first sliding guide and at least a second sliding guide, in that said movable part is adapted to slide in said at least a first sliding guide, and in that said first end of said lever is adapted to slide in said at least a second sliding guide.

More in particular according to the invention, said at least first sliding guide may be a linear guide.

Still according to the invention, said at least second sliding guide may be substantially shaped in the form of a "V" in such a way as to present a first portion sloping down downwards and a second portion sloping down upwards, so as to provoke the tilting movement of said second portion.

Always according to the invention, said displacement system may comprise a backrest structure constrained in rotation to said first portion of said sitting portion surface, said backrest structure presenting a backrest surface, for the support, during the use, of the back of a passenger, lying on a third plane, and in that said displacement means are configured in such a way as to act on said backrest structure so that when said displacement system is in said first configuration said third plane is inclined with respect to said first plane by a fourth angle comprised between around +90° and +100°, and in that in said second configuration it is inclined by a fifth angle comprised between around +95° and +120°.

Further according to the invention, said displacement means may be configured in such a way as to act on said backrest structure so that when said displacement system is in said third configuration said third plane is inclined with respect to said first plane by a sixth angle equivalent to 180°. Moreover, the displacement system according to the invention may further comprise a legrest structure constrained in rotation to said second portion of said sitting portion surface, said legrest structure presenting a legrest surface, for supporting the legs of a passenger, lying on a fourth plane, whereby said displacement means are configured in such a way as to act on said legrest structure so that when said displacement system is in said first configuration said fourth plane is inclined with respect to said second plane by a seventh angle comprised between around -90° and 180°, and in said second configuration it is inclined by a eighth angle comprised between around -90° and 180°.

Preferably according to the invention, said displacement means may be configured in such a way as to act on said legrest structure so that when said displacement system is in said third configuration said fourth plane is inclined with respect to said second plane by a ninth angle of 180°.

Finally according to the invention said displacement means may comprise a variable length lever.

The invention will be now described by way of illustration but not by way of limitation, with particular reference to the drawings of the enclosed figures, wherein:
figure 1 shows a rear perspective view of a displacement system for a seat according to the invention in the sitting configuration;
figure 2 shows a lateral view of the displacement system of figure 1;
figure 3 shows a front perspective of the displacement system of figure 1;
figure 4 shows a rear perspective view of the displacement system of figure 1 in the cradle configuration;
figure 5 shows a lateral view of the displacement system of figure 4;
figure 6 shows a front perspective view of the displacement system of figure 4;
figure 7 shows a rear perspective view of the displacement system of figure 1 in the bed configuration;
figure 8 shows a lateral view of the displacement system of figure 7; and
figure 9 shows a front perspective view of the displacement system of figure 7.

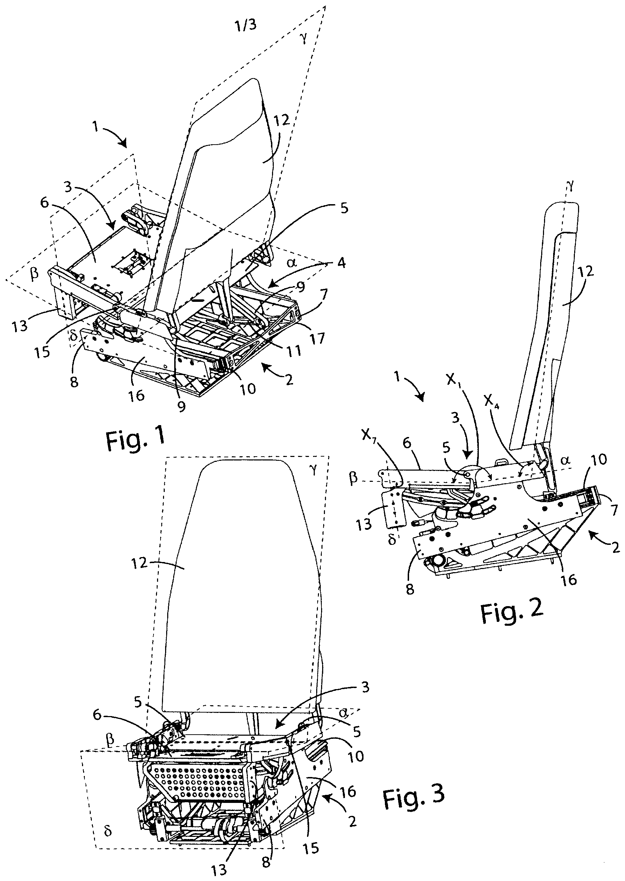

Making reference to figures 1-9, it is observed the displacement system for a seat, in particular an airplane seat, according to the invention, indicated with the reference number 1.

It is clear that the present invention can be applied both to airplane seats and seats for other transportation means, such as for example trains, buses and ships, or to seats suitable to be utilised in waiting rooms of airports, stations or others, without thereby falling outside the scope of the present invention (which is defined by the appended claims), wherein the main focus is in the improvement of the comfort of the user accommodated in the seat.

In the present text, reference will be made to the back portion of the seat, corresponding to the portion positioned in correspondence to the back of the possible passenger that is seated on the seat, the front portion of the seat, corresponding to the portion positioned in correspondence of the legs of the possible passenger seated on the seat, and the lateral positions, which find themselves in correspondence of the arms of the possible passenger seated on the seat.

A seat normally comprises a sitting portion (seat), a backrest and a legrest. In the enclosed figures the displacement system 1 according to the invention is shown, comprising the support structures of each component of a seat and, in particular, a support structure 2 for the seat support, lying on a plane or support surface, such as for example the floor of an airplane, a sitting portion structure 3 for the support of the sitting portion of the seat, a structure of the backrest 12, for the support of the backrest, and a structure of the legrest 13, for the support of the legrest of the seat.

The present invention mainly concerns the displacement and configuration of the sitting portion structure 3 and, secondarily, the displacement and configuration of the structures for backrest 12 and legrest 13. For ease of illustration, in the enclosed figures an only embodiment will be shown, which comprises all these three features.

It is observed, in particular, that such a sitting portion structure 3, or sitting frame, is connected to said seat support structure 2 and presents a sitting portion surface, for the support, during the use, of a passenger, subdivided into two portions 5 and 6. A first portion or back portion 5 lies on a first plane α and is adapted to support, during the use, the pelvis of a passenger, and a second portion or front portion 6 lies on a second plane β, and is adapted to support, during the use, the upper part of the legs of a passenger.

Such portions 5 and 6 are connected with each other and constrained in rotation in correspondence with the respective lateral portions, in at least a pivot point 15.

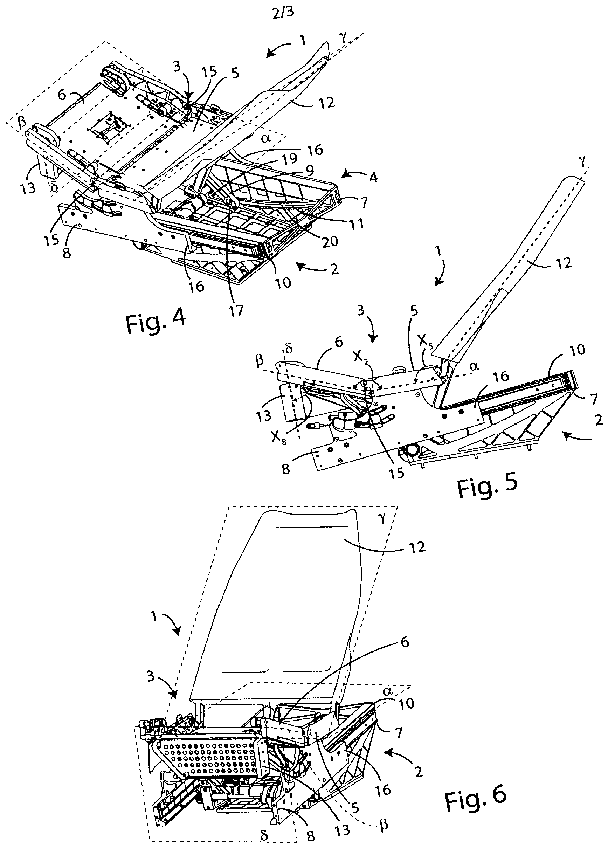

The displacement system 1 according to the invention further comprises displacement means 4 acting at least on said sitting portion structure 3 in such a way that said displacement system 1 passes from a first configuration or sitting configuration to at least a second configuration or cradle configuration and vice versa. In particular, said displacement means 4 are configured in such a way to act on said front portion 6 so that in said first configuration said second plane β is inclined with respect to said first plane α by a first angle x₁ substantially of 180° (as shown in figures 1-3), and in said at least second configuration is inclined by a second angle x₂ positive and smaller than 180° (as shown in figures 4-6), preferably said second angle x₂ is comprised between around +175° and +120°. So that the front portion 6 becomes a tilting portion.

It is to be noted that for the indication of the angles a circumference is conventionally considered, which is subdivided into an upper arch and a lower arch by a straight line formed by two planes, for example the first plane α and the second plane β, inclined of 180° with respect to each other, wherein all the angles smaller than 180° and indicated with the positive sign find themselves in the upper conference arch and wherein all the angles smaller than 180° and indicated with negative sign find themselves in the lower circumference arch.

This allows, advantageously, to separately tune the inclination of the front portion 6 and the back portion 5 of the sitting portion surface, allowing a better sitting portion ergonomics of the passenger, above all in the cradle configuration. Moreover, the displacement system according to the invention allows to reduce the absorptions of the electric actuators, because the weight of the passenger does not rest directly on them.

For an optimal ergonomic support of the pelvis of a passenger, such back portion 5 can present a length in depth that is substantially the half of the depth length of the front portion 6 of the sitting portion surface. Such depth proportion is particularly evident from the lateral views of the system 1 according to the invention, as represented in figures 2, 5 and 8.

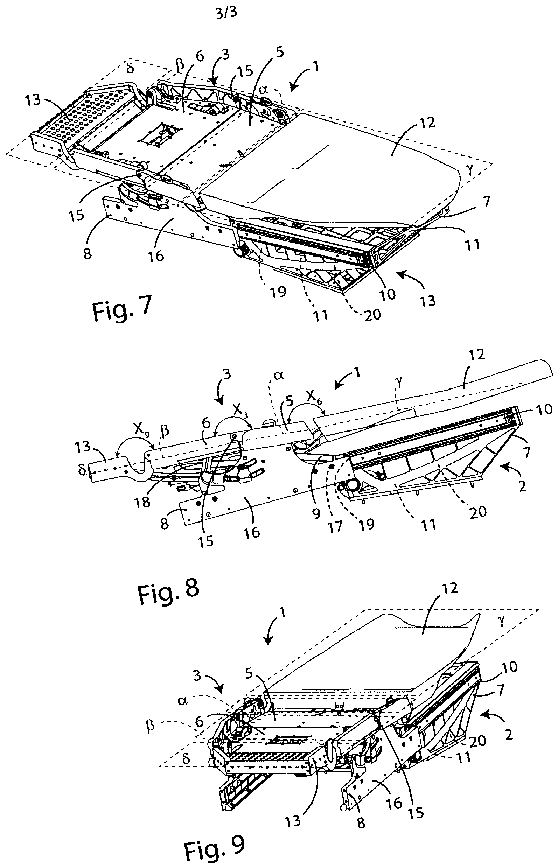

Still according to the invention, said displacement means 4 can be configured in such a way as to act directly on said front portion 6 so that said displacement system 1 is able to pass from said first configuration, said at least a second configuration, which comes out to be an intermediate configuration, to a third configuration or "bed" configuration, and in such a way that in said third configuration said second plane P is inclined with respect to said first plane α by a third angle x₃ substantially equivalent to 180° (as shown in the figures 7-9).

This allows advantageously to restore a configuration wherein the two portions 5 and 6 are substantially coplanar for a better comfort of a passenger in the bed position. In the particular embodiment represented in the figures, said displacement means 4 comprise two levers 9, in particular two milled elements, hinged at a first end 17 in said support structure 2 and at second end 18 in the front portion 6 of said sitting portion surface. Such levers 9 find themselves in correspondence with the lateral portions 16 of the support structure 2, however in other embodiments even an only lever 9 can be provided.

Such levers 9 allow therefore to operate the kinematic mechanism of the rotation of the front portion 6 with respect to the back portion 5 in said pivot point 15, and therefore of its tilting movement. The control and operation of said levers 9 can be carried out both mechanically, by suitable lever mechanism, or electronically.

Preferably, the displacement system 1 according to the invention can also provide that said support structure 2 comprises a fixed part 7, fixed with respect to the support plane of the seat, and a movable part 8, movable with respect to said fixed part 7. Such movable part 8 comes out to be integrally connected to said back portion 5 of the sitting portion surface, such as to move together with said movable part 8 and dragging also said front part 6 connected to it, although constrained in rotation. Moreover, said displacement means 4 are configured in such a way as to act on said movable part 8 so that it moves in front or back direction in the passage between said first configuration (figures 1-3) and said second configuration (figures 4-6) and vice versa, and possibly also said third bed configuration (figures 7-9).

In the embodiments shown in the enclosed figures, a movement of the movable part 8 is shown, which is in the front direction with respect to the fixed part 7, however in other embodiments such movement can be also opposed, i.e. in the back direction, without thereby falling outside the scope of protection of the present invention.

Such movement allows the forward movement of the sitting portion structure 3 to decrease the dimensions of the seat, when the backrest of the seat is inclined, for example in the cradle position, until assuming the bed position.

In the specific embodiments shown in the figures, said fixed part 7 comprises two first sliding guides 10, preferably positioned on the external sides of said fixed part 7 of the support structure 2, and two second sliding guides 11, preferably positioned on the internal sides of said fixed part 7 of the support structure 2. Moreover, said movable part 8 has two lateral portions 16, each able to slide in the respective first sliding guide 10 of the fixed part 7. Said levers 9, moreover, have said first end 17 hinged and suitable to slide in the respective second sliding guide 11 of the first fixed part 7.

This allows, advantageously, to control at the same time the forward-backward movement of the movable part 8, and therefore of the structure or sitting frame 3, with respect to the fixed part 7 of the support structure 2 and the rotation of the front portion or tilting portion 6 of the sitting portion surface with respect to the back portion 5.

It is evident that in further embodiments, a single first sliding guide 10 and a single second 11 sliding guide can be provided, in the case that, for example, an only lever 9 is provided.

In particular, the displacement system 1 according to the invention can provide that said first plane α whereon said back portion 5 of the sitting portion surface lies, in the passage between said first configuration and said at least second configuration, and vice versa, is constrained in a linear trajectory, preferably is always parallel to the support plane of the support structure 2. This allows advantageously to maintain, during the use of the seat, the pelvis of the passenger always in the same ergonomic position and to vary the inclination of the only second plane β whereon the front or tilting portion 6 of the sitting portion surface lies.

Such a solution can be obtained by using, preferably, a linear sliding guide 10, as, by the way, it is shown in the figures of the present disclosure.

Further, the displacement system 1 according to the invention can have said second sliding guides 11 shaped substantially in the form of "V" in such a way as to have a first back portion 20 sloping down downwards and a second front portion 19 sloping down upwards (visible, for example, in figure 3). This allows advantageously to obtain the tilting movement of the sitting portion structure 3 in the cradle configuration and at the same time to constrain the sliding movement of said lever 9.

As mentioned earlier, the displacement system 1 according to the invention can further comprise both a structure of backrest 12 and a structure of legrest 13, or only one of them, connected to the main kinematic mechanism.

In particular, said backrest structure 12 is constrained in rotation to the back portion 6 of the sitting portion surface and has a backrest surface, for the support, during the use, of the back of a passenger, lying on a third plane γ. Said displacement means 4 can therefore be configured in such a way as to act on said backrest structure 13 so that when said displacement system 1 is in said first configuration said third plane γ is inclined with respect to said first plane α by a fourth angle x₄ comprised between around +90° and +100° (as shown in the figures 1-3), and in said second configuration is inclined by a fifth angle x₅ comprised between around +95° and +120° (as shown in the figures 4-6).

This allows obtaining an optimal ergonomic support of the back of the passenger and at the same time an optimal ergonomic posture.

Moreover, if said third bed configuration is also provided, said displacement means 4 can be configured in such a way as to act on said backrest structure 13 so that when said displacement system 1 is in said third configuration said third plane γ is inclined with respect to said first plane α by a sixth angle x₆ equivalent to 180° (as shown in the figure 7-9).

In case also a legrest structure 13 is provided, it is constrained in rotation to said front portion 6 of the sitting portion surface, and presents a legrest surface to support the legs of a passenger, lying on a fourth plane δ. The displacement means 4 are configured in such a way to act on said legrest structure 13 so that when said displacement system 1 is in said first configuration said forth plane δ is inclined with respect to said second plane β by a seventh angle x₇ comprised between around -90° and +180° (as shown in the figures 1-3), and in said second configuration is inclined by an eighth angle x₈ comprised between around -90° and +180° (as shown in the figures 4-6).

Moreover, if said third bed configuration is provided as well, said displacement means 4 can be configured in such a way as to act on said legrest structure 13 so that when said displacement system 1 is in said third configuration said fourth plane δ is inclined with respect to said second plane P by a ninth angle x₉ of 180° (as shown in the figures 7-9).

Finally, the displacement system 1 according to the invention, in a preferred embodiment, can provide that said displacement means 4 comprise a lever having variable length connected to the movement of opening/closure of the legrest structure 13.

In the foregoing, preferred embodiments have been described and variations of the present invention have been suggested, but it is to be understood that those skilled in the art will make changes and modifications without thereby falling outside the scope of protection, as defined by the enclosed claims.

## Claims

1. Displacement system (1) for a seat, in particular an airplane seat, said seat comprising a sitting portion, a backrest and a legrest, said displacement system (1) comprising a support structure (2) for the support of said seat, a sitting portion structure (3) for the support of said sitting portion, said sitting portion structure (3) being connected to said support structure (2) and comprising a sitting portion surface lying at least on a first plane (α), and displacement means (4) acting at least on said sitting portion structure (3) in such a way that said displacement system (1) passes between a first configuration or sitting configuration and at least a second configuration or cradle configuration and vice versa, whereby said displacement system (1) provides that said sitting portion surface is subdivided into at least two sitting portions (5, 6), a first portion or back portion (5), lying on said first plane (α), and a second portion or front portion (6), lying on a second plane (β), said portions (5, 6) being constrained in rotation with each other in the passage between said first configuration and said at least second configuration, and vice versa, said displacement means (4) being configured in such a way as to act on said second portion (6) so that in said first configuration said second plane (β) is inclined with respect to said first plane (α) by a first angle (x₁) substantially of 180°, and in said at least second configuration it is inclined by a second angle (x₂) positive and smaller than 180°, said displacement system (1) being **characterised in that** said support structure (2) comprises a fixed part (7) and a movable part (8) that is movable with respect to said fixed part (7), said movable part (8) being integrally connected to said first portion (5) of said sitting portion surface, and **in that** said displacement means (4) are configured in such a way as to act on said movable part (8) so that it moves in a front/back direction in the passage between said first configuration and said at least second configuration and vice versa.

2. Displacement system (1) according to the previous claim, **characterised in that** said displacement means (4) are configured in such a way as to act on said second portion (6) so that in said at least second configuration said second plane (β) is inclined with respect to said first plane (α) by said second angle (x₂) comprised between around +175° and +120°.

3. Displacement system (1) according to any previous claim, **characterised in that** said first portion (5) has a depth that is substantially the half of said second portion (6), so as to ergonomically support, during the use, the pelvis of a passenger.

4. Displacement system (1) according to any previous claim, **characterised in that** said displacement means (4) are configured in such a way as to act on said second portion (6) so that said displacement system (1) is able to pass between said first configuration, said at least second configuration and a third configuration or bed configuration, and **in that** said displacement means (4) are configured in such a way that in said third configuration said second plane (β) is inclined with respect to said first plane (α) by a third angle (x₃) substantially equivalent to 180°.

5. Displacement system (1) according to any previous claim, **characterised in that** said displacement means (4) comprise at least a lever (9) hinged in a first end (17) in said support structure (2) and in the second end (18) in said second portion (6) of said sitting portion surface.

6. Displacement system (1) according to any previous claim, **characterised in that** said first plane (α) whereon said first portion (5) lies, in the passage between said first configuration and said at least second configuration, and vice versa, is constrained in a linear trajectory.

7. Displacement system (1) according to claim 6, when depending on claim 5, **characterised in that** said fixed part (7) comprises at least a first sliding guide (10) and at least a second sliding guide (11), **in that** said movable part (8) is adapted to slide in said at least first sliding guide (10), and **in that** said first end (17) of said lever (9) is adapted to slide in said at least second sliding guide (11).

8. Displacement system (1) according to the previous claim, when depending on claim 6, **characterised in that** said at least first sliding guide (10) is a linear guide.

9. Displacement system (1) according to claim 7 or 8, **characterised in that** said at least second sliding guide (11) is substantially shaped in the form of a "V" in such a way as to present a first portion (20) sloping down downwards and a second portion (19) sloping down upwards, such to provoke the tilting movement of said second portion (6).

10. Displacement system (1) according to any previous claim, **characterised in that** it further comprises a backrest structure (12) constrained in rotation to said first portion (5) of said sitting portion surface, said backrest structure (12) presenting a backrest surface, for the support, during the use, of the back of a passenger, lying on a third plane (γ), and **in that** said displacement means (4) are configured in such a way as to act on said backrest structure (13) so that when said displacement system (1) is in said first configuration said third plane (γ) is inclined with respect to said first plane (α) by a fourth angle (x₄) comprised between around +90° and +100°, and **in that** in said second configuration it is inclined by a fifth angle (x₅) comprised between around +95° and +120°.

11. Displacement system (1) according to the previous claim, when depending on claim 4, **characterised in that** said displacement means (4) are configured in such a way as to act on said backrest structure (12) so that when said displacement system (1) is in said third configuration said third plane (γ) is inclined with respect to said first plane (α) by a sixth angle (x₆) equivalent to 180°.

12. Displacement system (1) according to any previous claim, **characterised in that** it further comprises a legrest structure (13) constrained in rotation to said second portion (6) of said sitting portion surface, said legrest structure (13) presenting a legrest surface, for supporting the legs of a passenger, lying on a fourth plane (δ), and **in that** said displacement means (4) are configured in such a way as to act on said legrest structure (13) so that when said displacement system (1) is in said first configuration said fourth plane (δ) is inclined with respect to said second plane (β) by a seventh angle (x₇) comprised between around -90° and 180°, and in said second configuration is inclined by a eighth angle (x₈) comprised between around -90° and 180°.

13. Displacement system (1) according to the previous claim, when depending on claim 4, **characterised in that** said displacement means (4) are configured in such a way as to act on said legrest structure (13) so that when said displacement system (1) is in said third configuration said fourth plane (δ) is inclined with respect to said second plane (β) by a ninth angle (x₉) of 180°.

14. Displacement system (1) according to any claim 11-13, **characterised in that** said displacement means (4) comprise a variable length lever.

## Patentansprüche

1. Verstellsystem (1) für einen Sitz, insbesondere einen Flugzeugsitz, wobei der Sitz einen Sitzabschnitt, eine Rückenlehne und eine Beinstütze umfasst, wobei das Verstellsystem (1) eine Stützstruktur (2) zum Stützen des Sitzes, eine Sitzabschnittsstruktur (3) zum Stützen des Sitzabschnitts, wobei die Sitzabschnittsstruktur (3) mit der Stützstruktur (2) verbunden ist und eine Sitzabschnittsoberfläche umfasst, die zumindest auf einer ersten Ebene (α) liegt, und Verstellmittel (4) umfasst, die zumindest auf die Sitzabschnittsstruktur (3) so wirken, dass das Verstellsystem (1) zwischen einer ersten Konfiguration oder Sitzkonfiguration und zumindest einer zweiten Konfiguration oder Wiegenkonfiguration und umgekehrt verläuft, wobei
das Verstellsystem (1) vorsieht, dass die Sitzabschnittsoberfläche in zumindest zwei Sitzabschnitte (5, 6) unterteilt ist, einen ersten Abschnitt oder hinteren Abschnitt (5), der auf der ersten Ebene (α) liegt, und einen zweiten Abschnitt oder vorderen Abschnitt (6), der auf einer zweiten Ebene (β) liegt, wobei die Abschnitte (5, 6) im Verlauf zwischen der ersten Konfiguration und der zumindest zweiten Konfiguration und umgekehrt in Drehung miteinander gezwungen sind, wobei die Verstellmittel (4) so konfiguriert sind, dass sie auf den zweiten Abschnitt (6) so wirken, dass in der ersten Konfiguration die zweite Ebene (β) in Bezug auf die erste Ebene (α) um einen ersten Winkel (x₁) von im Wesentlichen 180° geneigt ist und sie in der zweiten Konfiguration um einen zweiten Winkel (x₂) geneigt ist, der positiv und kleiner als 180° ist, wobei das Verstellsystem (1) **dadurch gekennzeichnet ist, dass** die Stützstruktur (2) einen fixen Teil (7) und einen bewegbaren Teil (8), der in Bezug auf den fixen Teil (7) bewegbar ist, umfasst, wobei der bewegbare Teil (8) mit dem ersten Abschnitt (5) der Sitzabschnittsoberfläche gänzlich verbunden ist,
und dass die Verstellmittel (4) so konfiguriert sind, dass sie auf den bewegbaren Teil (8) so wirken, dass dieser sich im Verlauf zwischen der ersten Konfiguration und der zumindest zweiten Konfiguration und umgekehrt in Richtung vorne/hinten bewegt.

2. Verstellsystem (1) nach dem vorstehenden Anspruch, **dadurch gekennzeichnet, dass** die Verstellmittel (4) so konfiguriert sind, dass sie auf den zweiten Abschnitt (6) so wirken, dass in der zumindest zweiten Konfiguration die zweite Ebene (β) in Bezug auf die erste Ebene (α) um den zweiten Winkel (x₂) geneigt ist, der zwischen etwa +175° und +120° liegt.

3. Verstellsystem (1) nach einem der vorstehenden Ansprüche, **dadurch gekennzeichnet, dass** der erste Abschnitt (5) eine Tiefe aufweist, die im Wesentlichen halb so groß ist wie jene des zweiten Abschnitts (6), um bei Verwendung das Becken eines Passagiers ergonomisch zu stützen.

4. Verstellsystem (1) nach einem der vorstehenden Ansprüche, **dadurch gekennzeichnet, dass** die Verstellmittel (4) so konfiguriert sind, dass sie auf den zweiten Abschnitt (6) so wirken, dass das Verstellsystem (1) in der Lage ist, zwischen der ersten Konfiguration, der zumindest zweiten Konfiguration und einer dritten oder Bettkonfiguration zu verlaufen, und dass die Verstellmittel (4) so konfiguriert sind, dass in der dritten Konfiguration die zweite Ebene (β) in Bezug auf die erste Ebene (α) um einen dritten Winkel (x₃), der im Wesentlichen 180° gleicht, geneigt ist.

5. Verstellsystem (1) nach einem der vorstehenden Ansprüche, **dadurch gekennzeichnet, dass** die Verstellmittel (4) zumindest einen Hebel (9) umfassen, der in einem ersten Ende (17) in der Stützstruktur (2) und in dem zweiten Ende (18) in dem zweiten Abschnitt (6) der Sitzabschnittsoberfläche angelenkt ist.

6. Verstellsystem (1) nach einem der vorstehenden Ansprüche, **dadurch gekennzeichnet, dass** die erste Ebene (α), auf der der erste Abschnitt (5) liegt, im Verlauf zwischen der ersten Konfiguration und der zumindest zweiten Konfiguration und umgekehrt in eine lineare Bahn gezwungen ist.

7. Verstellsystem (1) nach Anspruch 6 in Abhängigkeit von Anspruch 5, **dadurch gekennzeichnet, dass** der fixe Teil (7) zumindest eine erste Gleitführung (10) und zumindest eine zweite Gleitführung (11) umfasst, dass der bewegbare Teil (8) so angepasst ist, dass er in der zumindest ersten Gleitführung (10) gleitet und dass das zweite Ende (17) des Hebels (9) so angepasst ist, dass es in der zumindest zweiten Gleitführung (11) gleitet.

8. Verstellsystem (1) nach den vorstehenden Ansprüchen in Abhängigkeit von Anspruch 6, **dadurch gekennzeichnet, dass** die zumindest erste Gleitführung (10) eine lineare Führung ist.

9. Verstellsystem (1) nach Anspruch 7 oder 8, **dadurch gekennzeichnet, dass** die zumindest zweite Gleitführung (11) im Wesentlichen in der Form eines "V" geformt ist, indem sie einen ersten Abschnitt (20), der nach unten schräg abfällt, und einen zweiten Abschnitt (19), der nach oben schräg abfällt, aufweist, um so die Kippbewegung des zweiten Abschnitts (6) herbeizuführen.

10. Verstellsystem (1) nach einem der vorstehenden Ansprüche, **dadurch gekennzeichnet, dass** es weiter eine Rückenlehnenstruktur (12) umfasst, die in Drehung an den ersten Abschnitt (5) der Sitzabschnittsoberfläche gezwungen ist, wobei die Rückenlehnenstruktur (12) eine Rückenlehnenoberfläche zur Stützung des Rückens eines Passagiers bei Verwendung aufweist, die auf einer dritten Ebene (γ) liegt, und dass die Verstellmittel (4) so konfiguriert sind, dass sie auf die Rückenlehnenstruktur (13) so wirken, dass die dritte Ebene (γ) in Bezug auf die erste Ebene (α) um einen vierten Winkel (x₄) geneigt ist, der zwischen etwa +90° und +100° liegt, wenn das Verstellsystem (1) in der ersten Konfiguration ist, und dass sie in der zweiten Konfiguration um einen fünften Winkel (x₅) geneigt ist, der zwischen etwa +95° und +120° liegt.

11. Verstellsystem (1) nach dem vorstehenden Anspruch in Abhängigkeit von Anspruch 4, **dadurch gekennzeichnet, dass** die Verstellmittel (4) so konfiguriert sind, dass sie auf die Rückenlehnenstruktur (12) so wirken, dass, wenn das Verstellsystem (1) in der dritten Konfiguration ist, die dritte Ebene (γ) in Bezug auf die erste Ebene (α) um einen sechsten Winkel (x₆) geneigt ist, der 180° gleicht.

12. Verstellsystem (1) nach einem der vorstehenden Ansprüche, **dadurch gekennzeichnet, dass** es weiter eine Beinstützenstruktur (13) umfasst, die in Drehung an den zweiten Abschnitt (6) der Sitzabschnittsoberfläche gezwungen ist, wobei die Beinstützenstruktur (13) eine Beinstützenoberfläche zur Stützung der Beine eines Passagiers aufweist, die auf einer vierten Ebene (δ) liegt, und dass die Verstellmittel (4) so konfiguriert sind, dass sie auf die Beinstützenstruktur (13) so wirken, dass, wenn das Verstellsystem (1) in der ersten Konfiguration ist, die vierte Ebene (δ) in Bezug auf die zweite Ebene (β) um einen siebenten Winkel (x₇) geneigt ist, der zwischen etwa -90° und 180° liegt, und in der zweiten Konfiguration um einen achten Winkel (x₈) geneigt ist, der zwischen etwa -90° und 180° liegt.

13. Verstellsystem (1) nach dem vorstehenden Anspruch in Abhängigkeit von Anspruch 4, **dadurch gekennzeichnet, dass** die Verstellmittel (4) so konfiguriert sind, dass sie auf die Beinstützenstruktur (13) so wirken, dass, wenn das Verstellsystem (1) in der dritten Konfiguration ist, die vierte Ebene (δ) in Bezug auf die zweite Ebene (β) um einen neunten Winkel (x9) von 180° geneigt ist.

14. Verstellsystem (1) nach einem der Ansprüche 11-13, **dadurch gekennzeichnet, dass** die Verstellmittel (4) einen Hebel mit variabler Länge umfassen.

## Revendications

1. Système de déplacement (1) d'un siège, notamment d'un siège d'avion, ledit siège comprenant une partie d'assise, un dossier et un repose-jambes, ledit système de déplacement (1) comprenant une structure de support (2) pour le support dudit siège, une structure de partie d'assise (3) pour le support de ladite partie d'assise, ladite structure de partie d'assise (3) étant reliée à ladite structure de support (2) et comprenant une surface de partie d'assise située au moins sur un premier plan (α), et des moyens de déplacement (4) agissant au moins sur ladite structure de partie d'assise (3) de telle manière que ledit système de déplacement (1) passe entre une première configuration ou configuration assise et au moins une deuxième configuration ou configuration de berceau et inversement, selon lequel
ledit système de déplacement (1) prévoit que ladite surface de partie d'assise est subdivisée en au moins deux parties d'assise (5, 6), une première partie ou partie arrière (5), située sur ledit premier plan (α), et une deuxième partie ou partie avant (6), située sur un deuxième plan (β), lesdites parties (5, 6) étant contraintes en rotation l'une avec l'autre dans le passage entre ladite première configuration et ladite au moins deuxième configuration, et inversement, lesdits moyens de déplacement (4) étant configurés de manière à agir sur ladite deuxième partie (6) de sorte que dans ladite première configuration, ledit deuxième plan (β) soit incliné par rapport audit premier plan (α) d'un premier angle (x₁) sensiblement de 180°, et dans ladite au moins deuxième configuration, il est incliné d'un deuxième angle (x₂) positif et inférieur à 180°, ledit système de déplacement (1) étant **caractérisé en ce que** ladite structure de support (2) comprend une partie fixe (7) et une partie mobile (8) qui est mobile par rapport à ladite partie fixe (7), ladite partie mobile (8) étant reliée d'un seul tenant à ladite première partie (5) de ladite surface de partie d'assise, et
**en ce que** lesdits moyens de déplacement (4) sont configurés de manière à agir sur ladite partie mobile (8) de sorte qu'elle se déplace dans une direction avant/arrière dans le passage entre ladite première configuration et ladite au moins deuxième configuration et inversement.

2. Système de déplacement (1) selon la revendication précédente, **caractérisé en ce que** lesdits moyens de déplacement (4) sont configurés de manière à agir sur ladite deuxième partie (6) de sorte que dans ladite au moins deuxième configuration, ledit deuxième plan (β) soit incliné par rapport audit premier plan (α) dudit deuxième angle (x₂) compris entre environ +175° et +120°.

3. Système de déplacement (1) selon une quelconque revendication précédente, **caractérisé en ce que** ladite première partie (5) a une profondeur qui est sensiblement la moitié de ladite deuxième partie (6), de façon à supporter ergonomiquement, pendant l'utilisation, le bassin d'un passager.

4. Système de déplacement (1) selon une quelconque revendication précédente, **caractérisé en ce que** lesdits moyens de déplacement (4) sont configurés de manière à agir sur ladite deuxième partie (6) de sorte que ledit système de déplacement (1) soit capable de passer entre ladite première configuration, ladite au moins deuxième configuration et une troisième configuration ou configuration de lit, et **en ce que** lesdits moyens de déplacement (4) sont configurés de telle manière que dans ladite troisième configuration, ledit deuxième plan (β) soit incliné par rapport audit premier plan (α) d'un troisième angle (x₃) sensiblement équivalent à 180°.

5. Système de déplacement (1) selon une quelconque revendication précédente, **caractérisé en ce que** lesdits moyens de déplacement (4) comprennent au moins un levier (9) articulé dans une première extrémité (17) dans ladite structure de support (2) et dans la deuxième extrémité (18) dans ladite deuxième partie (6) de ladite surface de partie d'assise.

6. Système de déplacement (1) selon une quelconque revendication précédente, **caractérisé en ce que** ledit premier plan (α) sur lequel se situe ladite première partie (5), dans le passage entre ladite première configuration et ladite au moins deuxième configuration, et inversement, est contraint dans une trajectoire linéaire.

7. Système de déplacement (1) selon la revendication 6, lorsque dépendante de la revendication 5, **caractérisé en ce que** ladite partie fixe (7) comprend au moins un premier guide coulissant (10) et au moins un deuxième guide coulissant (11), **en ce que** ladite partie mobile (8) est adaptée pour coulisser dans ledit au moins premier guide coulissant (10), et **en ce que** ladite première extrémité (17) dudit levier (9) est adaptée pour coulisser dans ledit au moins deuxième guide coulissant (11).

8. Système de déplacement (1) selon la revendication précédente, lorsque dépendante de la revendication 6, **caractérisé en ce que** ledit au moins premier guide coulissant (10) est un guide linéaire.

9. Système de déplacement (1) selon la revendication 7 ou 8, **caractérisé en ce que** ledit au moins deuxième guide coulissant (11) est sensiblement façonné sous la forme d'un « V » de manière à présenter une première partie (20) inclinée vers le bas et une deuxième partie (19) inclinée vers le haut, de sorte à provoquer le mouvement d'inclinaison de ladite deuxième partie (6).

10. Système de déplacement (1) selon une quelconque revendication précédente, **caractérisé en ce qu'**il comprend en outre une structure de dossier (12) contrainte en rotation vers ladite première partie (5) de ladite surface de partie d'assise, ladite structure de dossier (12) présentant une surface de dossier, pour le support, pendant l'utilisation, du dos d'un passager, située sur un troisième plan (γ), et **en ce que** lesdits moyens de déplacement (4) sont configurés de manière à agir sur ladite structure de dossier (13) de sorte que lorsque ledit système de déplacement (1) est dans ladite première configuration, ledit troisième plan (γ) soit incliné par rapport audit premier plan (α) d'un quatrième angle (x₄) compris entre environ +90° et +100°, et **en ce que** dans ladite deuxième configuration, il est incliné d'un cinquième angle (x₅) compris entre environ +95° et +120°.

11. Système de déplacement (1) selon la revendication précédente, lorsque dépendante de la revendication 4, **caractérisé en ce que** lesdits moyens de déplacement (4) sont configurés de manière à agir sur ladite structure de dossier (12) de sorte que lorsque ledit système de déplacement (1) est dans ladite troisième configuration ledit troisième plan (γ) soit incliné par rapport audit premier plan (α) d'un sixième angle (x₆) équivalent à 180°.

12. Système de déplacement (1) selon une quelconque revendication précédente, **caractérisé en ce qu'**il comprend en outre une structure de repose-jambes (13) contrainte en rotation vers ladite deuxième partie (6) de ladite surface de partie d'assise, ladite structure de repose-jambes (13) présentant une surface de repose-jambes, pour supporter les jambes d'un passager, située sur un quatrième plan (δ), et **en ce que** lesdits moyens de déplacement (4) sont configurés de manière à agir sur ladite structure de repose-jambes (13) de sorte que lorsque ledit système de déplacement (1) est dans ladite première configuration ledit quatrième plan (δ) soit incliné par rapport audit deuxième plan (β) d'un septième angle (x₇) compris entre environ -90° et 180°, et dans ladite deuxième configuration, soit incliné d'un huitième angle (x₈) compris entre environ -90° et 180°.

13. Système de déplacement (1) selon la revendication précédente, lorsque dépendante de la revendication 4, **caractérisé en ce que** lesdits moyens de déplacement (4) sont configurés de manière à agir sur ladite structure de repose-jambes (13) de sorte que lorsque ledit système de déplacement (1) est dans ladite troisième configuration, ledit quatrième plan (δ) soit incliné par rapport audit deuxième plan (β) d'un neuvième angle (x₉) de 180°.

14. Système de déplacement (1) selon une quelconque revendication 11-13, **caractérisé en ce que** lesdits moyens de déplacement (4) comprennent un levier de longueur variable.
